# EUROPÄISCHE PATENTSCHRIFT

(11) **EP 3 757 688 B1**
(45) Veröffentlichungstag und Bekanntmachung des Hinweises auf die Patenterteilung: **28.12.2022**
(21) Anmeldenummer: 19181916.8
(22) Anmeldetag: 24.06.2019
(51) Int. Cl.: G05B 19/042

(54) **VERFAHREN ZUR KONFIGURATION EINER INDUSTRIELLEN MASCHINE**
METHOD FOR CONFIGURING AN INDUSTRIAL MACHINE
PROCÉDÉ DE CONFIGURATION D'UNE MACHINE INDUSTRIELLE

(43) Veröffentlichungstag der Anmeldung: 30.12.2020
(73) Patentinhaber: SICK AG, 79183 Waldkirch (DE)
(72) Erfinder: Ams, Mathias, 79211 Denzlingen (DE); Fecher, Dr., Harald, 79111 Freiburg (DE); Wehrle, Dr., Martin, 79111 Freiburg (DE); Ziegenmeyer, Dr., Marco, 79238 Ehrenkirchen (DE)
(74) Vertreter: Manitz Finsterwald Patent- und Rechtsanwaltspartnerschaft mbB

(56) Entgegenhaltungen:
- EP-A1- 3 021 181
- US-A1- 2007 174 225
- US-A1- 2010 262 902

## Beschreibung

Die vorliegende Erfindung betrifft ein Verfahren zur Konfiguration zumindest einer industriellen Maschine, wobei die Maschine mehrere separate Geräte, beispielsweise Feldgeräte, speicherprogrammierbare Steuerungen (SPS) und/oder Feldbusse, umfasst.

In heutigen Produktionsprozessen werden industrielle Maschinen eingesetzt, welche aus einer Vielzahl von separaten Geräten gebildet sein können. Insbesondere können als Geräte Aktoren (z.B. Servoantriebe), Sensoren (z.B. Temperatursensoren oder Sensoren zur Umgebungserfassung), Recheneinrichtungen, Datenbusse und dergleichen verwendet werden.

Um die Funktion der industriellen Maschine korrekt zu realisieren, müssen sämtliche Geräte der Maschine passend konfiguriert sein. Hierbei stellt sich die Herausforderung, dass mit zunehmender Vernetzung von Steuerungen, Sensoren und Aktoren die Konfiguration der Geräte immer komplexer wird, da immer mehr Abhängigkeiten zwischen den einzelnen Geräten und damit zwischen den Konfigurationen entstehen.

Um die Komplexität zu begrenzen, ist es bekannt, die Geräte der Maschine jeweils einzeln zu konfigurieren. Hierbei können aber unübersichtliche Konflikte bei Parametern entstehen, die oftmals nur schwer auflösbar sind. Auch sind Abhängigkeiten zwischen verschiedenen Geräten häufig nicht ohne weiteres zu erkennen, wodurch weitere Fehlerquellen entstehen können.

Aus der EP 3 021 181 A1 ist ein Konfigurationssystem für einen industriellen Prozess bekannt. Das Konfigurationssystem kann ein Repository umfassen, in welchem Prozessvorlagen hinterlegt sind. Diese Vorlagen umfassen eine Steuerlogik zur Steuerung einer Gruppe von Geräten in dem industriellen Prozess.

Es ist die der Erfindung zugrundeliegende Aufgabe, ein Verfahren anzugeben, welches eine vereinfachte und damit weniger fehleranfällige Konfiguration einer industriellen Maschine gestattet.

Diese Aufgabe wird erfindungsgemäß durch ein Verfahren gemäß Anspruch 1 gelöst.

Bei dem erfindungsgemäßen Verfahren wird ein elektronisches Konfigurationssystem verwendet, wobei mittels des elektronischen Konfigurationssystems
- eine vordefinierte Konfigurationsvorlage bereitgestellt wird, wobei der Konfigurationsvorlage zumindest zwei separate Geräte der Maschine zugeordnet werden,
- die Konfigurationsvorlage verwendet wird, um zumindest eine Funktion der industriellen Maschine zu konfigurieren,
- aus der konfigurierten Funktion jeweils ein Parametersatz mit Geräteparametern für die zwei separaten Geräte erzeugt wird, wobei die Konfigurationsvorlage ein Geräteparameter-Regelwerk umfasst, wobei mittels des Geräteparameter-Regelwerks die Geräteparameter festgelegt werden,
- der Parametersatz an die zwei separaten Geräte übertragen wird, um die Geräte zu konfigurieren.

Die Erfindung setzt dabei auf dem Gedanken auf, dass es durch die vordefinierte Konfigurationsvorlage ermöglicht wird, nicht einzelne Geräte der Maschine zu konfigurieren, sondern Funktionen der gesamten industriellen Maschine zu definieren bzw. zu konfigurieren. Eine Funktion kann ein Zusammenwirken mehrerer Geräte benötigen. Ein Benutzer kann also angeben, welche Funktionen die Maschine ausführen soll. Aus der so konfigurierten Funktion kann dann, insbesondere automatisch, ein Parametersatz mit Geräteparametern erzeugt werden, welcher wiederum an die Geräte übertragen wird, um die Geräte zu konfigurieren. Abhängigkeiten zwischen einzelnen Geräten sind erfindungsgemäß bereits in der Konfigurationsvorlage hinterlegt, so dass beim Erzeugen der Parametersätze aus der konfigurierten Funktion diese Abhängigkeiten (automatisch) berücksichtigt werden können.

Ein erfindungsgemäßer Vorteil ist, dass eine einmal entwickelte bzw. fertige Konfigurationsvorlage (mit dem zugehörigen Geräteparameter-Regelwerk) in vielen ähnlichen Projekten eingesetzt werden kann, wodurch der Aufwand zur korrekten Konfiguration der Maschinen der jeweiligen Projekte deutlich reduziert werden kann. Der Aufwand zur einmaligen Erstellung der Konfigurationsvorlage wird dabei vielfach eingespart.

Für einen Benutzer wird die Konfiguration der Maschine somit deutlich erleichtert, da der Benutzer die gewünschte Funktion der Maschine angeben kann, woraufhin dann entsprechend angepasste Parametersätze erzeugt werden. Unter der Funktion der Maschine ist dabei eine "High-Level"-Funktion gemeint, welche das Zusammenwirken von mehreren Geräten der Maschine erfordert. Es muss also nicht z.B. für jeden Servoantrieb angegeben werden, mit welcher Geschwindigkeit oder mit welchem Bremsverhalten der Servoantrieb zu betreiben ist. Dies kann aus der Konfiguration der Funktion der Maschine abgeleitet werden. Wird beispielsweise als Funktion der Transport von Gegenständen auf einem Förderband mit einem vordefinierten Durchsatz gewünscht, so können die das Förderband antreibenden Servoantriebe automatisch entsprechend konfiguriert werden.

Das Erzeugen des Parametersatzes kann beispielsweise mittels eines Geräteparameter-Regelwerks erfolgen. Hierzu kann zumindest eine Konfigurationsvorlage solch ein Geräteparameter-Regelwerk umfassen, wobei mittels des Geräteparameter-Regelwerks die Geräteparameter festgelegt werden. Die Geräteparameter werden durch das Geräteparameter-Regelwerk aus Eingaben in die Konfigurationsvorlage erzeugt. Das Geräteparameter-Regelwerk nimmt bevorzugt eine Veränderung an den Eingaben (z.B. des Benutzers) in die Konfigurationsvorlage vor, wobei durch die Veränderung die Geräteparameter erzeugt werden. Dies bedeutet, dass das Geräteparameter-Regelwerk nicht-trivial ist und nicht nur eine unveränderte Abbildung der Eingaben auf die Geräteparameter vornimmt.

Das Geräteparameter-Regelwerk kann beispielsweise vordefinierte mathematische Funktionen, Entscheidungsbäume, Boolesche/logische Funktionen und dergleichen umfassen. Insbesondere kann das Geräteparameter-Regelwerk eine Vielzahl von Geräteparametern erzeugen, wobei die Anzahl der Geräteparameter deutlich größer (z.B. zwei Mal oder fünf Mal) größer ist, als die Anzahl der in die Konfigurationsvorlage einstellbaren Werte.

Für unterschiedliche Maschinen oder Teile der Maschine können unterschiedliche Konfigurationsvorlagen bereitgestellt werden. Vor dem Bereitstellen müssen die unterschiedlichen Konfigurationsvorlagen entsprechend ihres Einsatzzwecks entwickelt oder angepasst werden. Beispielsweise kann eine Konfigurationsvorlage bereitgestellt werden, die ein Datennetzwerk in Form eines Feldbusses betrifft. Dieser Konfigurationsvorlage können dann sämtliche an den Feldbus angeschlossenen Geräte der Maschine zugeordnet sein. In der Konfigurationsvorlage kann der Benutzer dann beispielsweise die gewünschte Übertragungsgeschwindigkeit einstellen, d.h. konfigurieren. Aus der gewünschten Übertragungsgeschwindigkeit wird dann jeweils ein Parametersatz für sämtliche an den Feldbus angeschlossenen Geräte erzeugt, der die entsprechende Übertragungsgeschwindigkeit beinhaltet. In dem Parametersatz können, falls erforderlich, auch die Netzwerkadressen der einzelnen Geräte enthalten sein. Die Integration der Netzwerkadressen in den Parametersatz kann automatisch von der Konfigurationsvorlage vorgenommen werden, so dass hier wiederum die Komplexität für den Benutzer reduziert wird.

Ebenfalls ist es z.B. möglich, eine Konfigurationsvorlage für eine stationäre Maschine bereitzustellen, wobei von der Maschine im Betrieb eine Gefahr ausgeht, so dass die Maschine auf zwei Seiten überwacht werden muss, wobei jede zu überwachende Seite mittels zweier Scanner überwacht wird. In diesem Fall kann eine Konfigurationsvorlage zur Überwachung bereitgestellt werden, wobei dieser Konfigurationsvorlage dann die beiden Scanner einer Seite sowie eine SPS der stationären Maschine zugeordnet werden. In der Konfigurationsvorlage kann dann als Funktion beispielsweise der Radius angegeben werden, innerhalb welchem ein Eindringen einer Person zu einer Abschaltung der Maschine führt. Aus dieser Konfiguration der Funktion kann die Konfigurationsvorlage dann (automatisch) den jeweiligen Scannern verschiedene passende Schutzfelder zuweisen, sowie die Kommunikation zwischen der SPS und den Scannern passend einstellen. Ein entsprechender Parametersatz wird dann sowohl an die Scanner als auch an die SPS übertragen, so dass für einen Benutzer hier die Komplexität ebenfalls deutlich reduziert wird.

Einer Konfigurationsvorlage werden Geräte zugeordnet und die Konfigurationsvorlage umfasst bevorzugt Konfigurationsvorlagen-Parameter (z.B. den vorstehend genannten Radius der Überwachung durch den Scanner), welche konkrete Werte aufweisen.

Bei den separaten Geräten der Maschine kann es sich um funktional unterschiedliche Geräte handeln, die beispielsweise in separaten Gehäusen angeordnet sind. Die Geräte wirken bevorzugt zusammen, um die Funktion der industriellen Maschine zu erfüllen. Insbesondere kann eine SPS verschiedene Feldgeräte (Aktoren oder Sensoren) steuern und/oder auswerten, um die Funktion der Maschine zu gewährleisten.

Zumindest zwei der Geräte, oder auch alle Geräte, können verschiedenartige Geräte sein. Verschiedenartige Geräte können z.B. unterschiedliche Modelle von Antriebssteuerungen, Sensoren, Aktoren, speicherprogrammierbaren Steuerungen und dergleichen sein. Beispielsweise können der Konfigurationsvorlage zwei verschiedene Arten von Sensoren zugeordnet sein, z.B. ein Lichtgitter und ein Laserscanner. Auch ist es möglich, der Konfigurationsvorlage z.B. eine SPS und einen Sensor zuzuordnen. Als Funktion für das Zusammenwirken von SPS und Sensor kann dann mittels der Konfigurationsvorlage beispielsweise die Überwachung eines Gefahrenbereichs konfiguriert werden.

Bevorzugt umfasst die Funktion, welche mittels der Konfigurationsvorlage konfiguriert wird, nicht ausschließlich die Datenkommunikation zwischen den Geräten. Insbesondere können mit der Funktion, z.B. nur, mechanische Vorgänge konfiguriert werden, beispielsweise der Transport und/oder die Verarbeitung von Werkstücken.

Bei dem Parametersatz und bei den Geräteparametern handelt es sich nicht um ein Ablaufprogramm, sondern um die Parameter, die die Ausführung eines Ablaufprogramms durch das jeweilige Gerät ermöglichen bzw. dessen Ausführung beeinflussen. Die Geräteparameter können dementsprechend z.B. eine maximale Geschwindigkeit, eine maximale Beschleunigung, ein erwartetes Datenformat, eine Geräte-ID und/oder eine auszugebende Messgröße umfassen. Die Gesamtheit der Geräteparameter (auch für mehrere Geräte) kann dann als Parametersatz bezeichnet werden, wobei bei der Übertragung des Parametersatzes an die Geräte jeweils nur die für das jeweilige Gerät relevanten Geräteparameter übertragen werden können.

Die Konfigurationsvorlage kann ausführbaren Code umfassen, welcher von dem Konfigurationssystem ausgeführt wird. Ebenfalls ist es möglich, dass die Konfigurationsvorlage durch eine Abbilddatei definiert wird, welche in ein auf dem Konfigurationssystem ausgeführtes Programm geladen wird.

Vorteilhafte Weiterbildungen der Erfindung sind der Beschreibung, den Zeichnungen sowie den Unteransprüchen zu entnehmen.

Gemäß einer ersten Ausführungsform werden mehrere weitere vordefinierte Konfigurationsvorlagen bereitgestellt. Die weiteren Konfigurationsvorlagen werden insbesondere verwendet, um jeweils zumindest eine weitere Funktion der industriellen Maschine zu konfigurieren, wobei aus der konfigurierten weiteren Funktion ein weiterer Parametersatz erzeugt wird.

Den weiteren Konfigurationsvorlagen kann/können jeweils zumindest ein Gerät, zumindest zwei Geräte oder eine Vielzahl von Geräten zugeordnet werden. Insbesondere kann auch dasselbe Gerät zwei oder mehr Konfigurationsvorlagen zugeordnet werden. In diesem Fall kann dann jeweils ein Teil der Geräteparameter des Geräts durch eine jeweilige Konfigurationsvorlage erzeugt werden. Auch ist es möglich, dass die weitere Konfigurationsvorlage einer bereits bestehenden Konfigurationsvorlage zugeordnet wird. Auf diese Weise kann eine Schachtelung der Konfigurationsvorlagen entstehen, wie später noch genauer erläutert.

Auch aus den weiteren Konfigurationsvorlagen kann jeweils ein weiterer Parametersatz mit Geräteparametern erzeugt werden, wobei der weitere Parametersatz dann an das jeweils zu konfigurierende Gerät übertragen wird, um dieses Gerät zu konfigurieren.

Sämtliche Funktionen und Geräte der Maschine können auf diese Weise mittels mehrerer Konfigurationsvorlagen konfiguriert werden. Bei einer Maschine kann beispielsweise eine Konfigurationsvorlage der Konfiguration des Feldbusses, eine weitere Konfigurationsvorlage der Absicherung des Umfelds und eine weitere Konfigurationsvorlage der Durchführung der Hauptfunktion der industriellen Maschine dienen (z.B. der Werkstückbearbeitung).

Bevorzugt stellt das Konfigurationssystem jeweils eindeutig dar, welche der Konfigurationsvorlagen gerade bearbeitet wird. Änderungen sind somit klar nachvollziehbar.

Gemäß einer weiteren Ausführungsform wird ein Geräteparameter eines Parametersatzes jeweils nur mittels genau einer Konfigurationsvorlage verändert. Ein Geräteparameter ist insbesondere ein in einem Gerät der Maschine einstellbarer Wert, beispielsweise eine Maximalgeschwindigkeit eines Servomotors. Dadurch, dass ein Geräteparameter dauerhaft nur mittels genau einer Konfigurationsvorlage geändert werden darf, wird eine deutliche Reduktion der Komplexität erzielt, da ein unbeabsichtigtes Ändern eines Geräteparameters durch eine andere Konfigurationsvorlage nicht möglich ist. Anders ausgedrückt ist jeder Geräteparameter genau einer Konfigurationsvorlage zugeordnet.

Dementsprechend kann die Konfigurationsvorlage eine Verantwortungsvorschrift umfassen, die die Zuständigkeit einer Konfigurationsvorlage für die Geräteparameter eines Parametersatzes definiert.

Erfindungsgemäß umfasst zumindest eine der Konfigurationsvorlagen eine Zuordnungsvorschrift, die angibt, welche Geräte der Konfigurationsvorlage zugeordnet werden dürfen oder müssen. Die Zuordnungsvorschrift kann also eine Gerätetypkombination angeben. Dies bedeutet, dass der Konfigurationsvorlage beispielsweise zwei Geräte des Typs Sensor, drei Geräte des Typs Aktor und ein Gerät des Typs Recheneinrichtung (z.B. SPS) zugeordnet werden müssen. Als weiteres Beispiel kann eine Profinet-Konfigurationsvorlage verlangen, dass ihr nur Geräte zugeordnet werden, die Profinet-netzwerkfähig sind.

Die Zuordnungsvorschrift und die Verantwortungsvorschrift können auch von den Festlegungen in der Konfigurationsvorlage abhängen. Wenn beispielsweise vom Benutzer in der Konfigurationsvorlage angegeben wurde, dass mindestens SIL 2 (Safety Integrity Level) benötigt wird, dann dürfen der Konfigurationsvorlage auch nur Geräte zugeordnet werden, die zumindest SIL 2 erfüllen.

Die Konfigurationsvorlage kann auch angeben, dass ihr optional vorbestimmte Geräte zugeordnet werden dürfen oder dass ein Gerät eines genau vorbestimmten Typs (z.B. ein bestimmter Servoantrieb oder ein bestimmter Annäherungssensor) zugeordnet werden müssen. Die Zuordnungsvorschrift kann auch die jeweilige Anzahl der Gerätetypen umfassen.

Gemäß einer weiteren vorteilhaften Ausführungsform betrifft die konfigurierte Funktion (oder alle konfigurierten Funktionen) ausschließlich oder zumindest eine Funktion der funktionalen Sicherheit der industriellen Maschine. Die konfigurierte Funktion kann somit Funktionen betreffen, die z.B. zumindest SIL 2 gemäß EN IEC 62061 bereitstellen. Allgemein kann die konfigurierte Funktion die funktionale Sicherheit gemäß IEC 61508 betreffen und die entsprechenden Anforderungen erfüllen.

Gemäß einer weiteren Ausführungsform werden die Geräteparameter ausschließlich auf der Grundlage von in die Konfigurationsvorlage eingegebenen Daten erzeugt, wobei das Geräteparameter-Regelwerk auf die in die Konfigurationsvorlage eingegebenen Daten angewandt wird. Die Geräteparameter werden insbesondere nicht basierend auf anderen Geräteparametern erzeugt. Die in die Konfigurationsvorlage eingegebenen Daten können z.B. manuell in eine Benutzeroberfläche (GUI) eingegeben werden. Alternativ können die eingegebenen Daten auch z.B. mittels einer Datei an die Konfigurationsvorlage übergeben werden.

Beispielsweise kann ein Geräteparameter "Wiederanlaufsperre" auf 5 Sekunden gesetzt werden, sofern ein Benutzer in der Konfigurationsvorlage als "Verfügbarkeit" der Maschine "hoch" angegeben hat. Bei einer Verfügbarkeit, die "normal" sein soll, kann der Geräteparameter "Wiederanlaufsperre" auf 30 Sekunden gesetzt sein. Als anderes Beispiel kann der Geräteparameter "erlaubte Übertragungspaketausfälle" bei Verfügbarkeit "hoch" auf 4 und bei Verfügbarkeit "normal" auf 2 gesetzt werden. Eine solche Zuordnung der Geräteparameter kann beispielsweise durch den genannten Entscheidungsbaum vorgenommen werden.

Gemäß einer weiteren Ausführungsform erstellt zumindest eine der Konfigurationsvorlagen für ein ihr zugeordnetes Gerät nur einen teilweisen Parametersatz. Dies bedeutet, dass der Konfigurationsvorlage nur ein Teil eines Geräts zugeordnet sein kann und somit nicht alle Geräteparameter eines Geräts von einer einzigen Konfigurationsvorlage erzeugt werden. Ein anderer Teil des Geräts kann dann einer anderen Konfigurationsvorlage zugeordnet sein, wodurch ein Gerät somit mehreren Konfigurationsvorlagen zugeordnet werden kann. Beispielsweise können die Klemmen 1 bis 20 einer speicherprogrammierbaren Steuerung einer ersten Konfigurationsvorlage und die Klemmen 21 bis 40 einer zweiten Konfigurationsvorlage zugeordnet sein. Die für die jeweiligen Klemmen zuständigen Geräteparameter werden dann jeweils nur von der zuständigen Konfigurationsvorlage erzeugt.

Gemäß einer weiteren Ausführungsform ist anstelle oder zusätzlich zu einem zugeordneten Gerät der Konfigurationsvorlage eine weitere Konfigurationsvorlage zugeordnet. Auf diese Weise können verschachtelte Konfigurationsvorlagen entstehen. Dies bietet beispielsweise den Vorteil, dass Abhängigkeiten zwischen Geräteparametern auf einfache Weise automatisch angepasst werden können, insbesondere innerhalb einer Konfigurationsvorlage oder auch übergreifend über mehrere verschachtelte Konfigurationsvorlagen. Die Zuordnung von Konfigurationsvorlagen zueinander basiert, insbesondere nur, auf Schnittstellen ("Interfaces"). Die Zuordnung der Konfigurationsvorlagen zueinander basiert dementsprechend nicht auf Gerätetypen der in der Maschine erfassten Geräte. In einer jeweiligen Konfigurationsvorlage kann gespeichert sein, welche Schnittstellen die jeweilige Konfigurationsvorlage erfüllt und welche anderen Schnittstellen von anderen Konfigurationsvorlagen ihr zugeordnet werden können oder müssen.

Gemäß einer weiteren Ausführungsform wird eine Gültigkeitsüberprüfung zumindest einer der Konfigurationsvorlagen durchgeführt, bei welcher diese Konfigurationsvorlage dann als gültig angesehen wird, wenn alle Anforderungen von weiteren Konfigurationsvorlagen erfüllt sind. Hierbei kann beispielsweise überprüft werden, ob sämtliche von der Konfigurationsvorlage geforderten Geräte oder weiteren Konfigurationsvorlagen zugeordnet wurden und/oder ob die zugeordneten Konfigurationsvorlagen verifiziert wurden (siehe unten).

Gemäß einer Ausführungsform wird der Parametersatz mit Geräteparametern mittels einer Netzwerkverbindung oder mittels USB (Universal Serial Bus) an die Geräte übertragen. Dies gilt entsprechend für die weiteren Parametersätze. Bei der Netzwerkverbindung kann es sich beispielsweise um eine Feldbusverbindung handeln. Als Feldbusse können insbesondere Profinet, EtherCAT, Sercos I bis III und dergleichen zum Einsatz kommen.

Überdies ist es möglich, über die Netzwerkverbindung den aktuellen Parametersatz von einem oder mehreren Geräten auszulesen und in einen Ist-Zustand umzurechnen, welcher dann in der Konfigurationsvorlage angezeigt wird. Dies bedeutet, dass z.B. nicht die Geräteparameter selbst in der Konfigurationsvorlage angezeigt werden. Stattdessen kann z.B. durch umgekehrte Anwendung des Geräteparameters-Regelwerks der funktionale Ist-Zustand in der Konfigurationsvorlage dargestellt werden.

Gemäß einer weiteren Ausführungsform werden mittels der Konfigurationsvorlage oder den Konfigurationsvorlagen sämtliche Parameter der Geräte der Maschine festgelegt. Unter sämtlichen Parametern ist dabei die Festlegung sämtlicher sinnvollerweise einzustellender Parameter zu verstehen. Hierdurch ist dann keine weitere Einrichtung bzw. Parametrierung einzelner Geräte notwendig. Die Gefahr, dass Abhängigkeiten oder Konflikte bei zusätzlicher externer Parametrierung bzw. Konfigurierung entstehen, wird dadurch minimiert.

Gemäß einer Ausführungsform wird die Konfigurationsvorlage in einer graphischen Benutzerschnittstelle (GUI - Graphical User Interface) angezeigt. Die GUI umfasst Eingabefelder oder graphische Eingabeelemente, um die zumindest eine Funktion der industriellen Maschine zu konfigurieren. Als graphische Eingabeelemente können beispielsweise Drop-Down-Elemente, Schieberegler und dergleichen zum Einsatz kommen. Ebenfalls ist es möglich, dass die Konfigurationsvorlage eine Visualisierung der Gerätezugehörigkeit umfasst, indem beispielsweise zugehörige Geräte angrenzend an oder innerhalb der Konfigurationsvorlage angezeigt werden.

Soll beispielsweise eine Konfiguration einer Maschine in Form eines fahrerlosen Transportfahrzeugs (AGV - Automated Guided Vehicle) vorgenommen werden, so kann eine AGV-Konfigurationsvorlage bereitgestellt werden. Die AGV-Konfigurationsvorlage kann fordern, dass ihr eine Profinet-Konfigurationsvorlage (für die interne Datenkommunikation in den AGV), zwei Servomotor-Konfigurationsvorlagen (für den Antrieb) und eine Laserscanner-Konfigurationsvorlage (zur Hinderniserkennung) zugeordnet werden. Mittels der Laserscanner-Konfigurationsvorlage kann ein Benutzer dann einstellen, wie groß beispielsweise der zu überwachende Bereich vor und neben dem Fahrzeug sein soll. Hieraus ermittelt die Laserscanner-Konfigurationsvorlage dann den Parametersatz für den in dem AGV vorhandenen Laserscanner. Mit diesem Parametersatz wird der Laserscanner dann konfiguriert. In entsprechender Weise kann mit den Motor-Konfigurationsvorlagen z.B. die gewünschte Maximalgeschwindigkeit oder eine maximale Beschleunigung eingestellt werden. Die AGV-Konfigurationsvorlage kann schließlich eine SPS sowie beispielsweise Beladungssensoren und weitere Geräte des AGVs konfigurieren.

Nach der Konfiguration der Maschinen-Funktionen in den Konfigurationsvorlagen und nach der Erzeugung der entsprechenden Parametersätze kann noch eine Verifikation der erzeugten Parametersätze stattfinden, z.B. mittels Konsistenzprüfung. Hierbei kann beispielsweise überprüft werden, ob für verschiedene Geräte eingestellte Datenraten oder Netzwerkadressen konsistent sind. Insbesondere kann eine geräteübergreifende Konfigurationsvorlage (d.h. eine Konfigurationsvorlage, der zumindest zwei Geräte zugeordnet sind) dann als verifiziert angesehen werden, wenn die Konfigurationen der zugeordneten Geräte verifiziert sind. Alternativ oder zusätzlich kann ein Gerät dann als verifiziert angesehen werden, wenn sämtliche Konfigurationsvorlagen verifiziert sind, welchen das Gerät zugeordnet ist oder wenn sämtliche Geräteparameter des Geräts verifiziert sind.

Die Konfigurationen der zugeordneten Geräte können als verifiziert gelten, wenn die Geräteparameter des jeweiligen Geräts korrekt sind. Dies kann dadurch verifiziert werden, dass die in die Konfigurationsvorlage eingegebenen Daten durch das Geräteparameter-Regelwerk in die Geräteparameter transformiert werden. Anschließend kann eine inverse Rücktransformation erfolgen, bei welcher aus den Geräteparametern die in die Konfigurationsvorlage eingegebenen Daten nochmals erzeugt werden. Stimmen die nochmals erzeugten Daten mit den tatsächlich eingegebenen Daten überein, so sind die Geräteparameter korrekt.

Vor der Rücktransformation können die erzeugten Geräteparameter optional auf das jeweilige Gerät übertragen und dann vom Gerät ausgelesen werden. Die Rücktransformation kann dann auf Basis der vom Gerät ausgelesenen Geräteparameter erfolgen. Auf diese Weise können z.B. Bitfehler bei der Übertragung oder Speicherung im Gerät erkannt werden.

Auch ist es möglich, aus den Geräteparametern für ein einzelnes Gerät einen Überprüfungswert (z.B. eine Checksumme, Hashwert oder dergleichen) zu generieren. Der Überprüfungswert kann ebenfalls an das Gerät übertragen werden, sodass das Gerät selbst dann die empfangenen Geräteparameter überprüfen kann. Auf das Auslesen der Geräteparameter vom Gerät kann dann verzichtet werden.

Gemäß einer weiteren Ausführungsform können die Schreibrechte für eine Konfigurationsvorlage, d.h. die Rechte eine Funktion der Maschine mittels einer Konfigurationsvorlage zu konfigurieren, nur für einen einzelnen Benutzer oder einen vorbestimmten Benutzerkreis freigegeben sein. Hierdurch werden Konflikte oder Inkonsistenzen zwischen Eingaben einzelner Benutzer verhindert. Eine Beschränkung auf einen einzelnen Benutzer oder einen vorbestimmten Benutzerkreis kann auch für das Auslesen oder das Modifizieren von Konfigurationsvorlagen vorgesehen sein.

Gemäß einer weiteren Ausführungsform kann für zumindest eine der Konfigurationsvorlagen eine Prüfsumme über zumindest einen Teil der mittels der Konfigurationsvorlage erzeugten Parameter ausgegeben werden. Durch die Prüfsumme können Änderungen leichter erkannt werden.

Gemäß einer weiteren Ausführungsform kann zumindest eine der Konfigurationsvorlagen zur Konfiguration eines Netzwerks, zur Konfiguration einer Bearbeitungsmaschine, zur Konfiguration eines AGVs, zur Konfiguration eines Laserscanners oder zur Konfiguration eines Lichtvorhangs dienen. Insbesondere können die Konfigurationsvorlagen Sicherheitsgeräte konfigurieren, die bevorzugt zumindest SIL 2 erfüllen.

Es versteht sich, dass hierin enthaltene Ausführungen, die "zumindest eine der Konfigurationsvorlagen" betreffen auch Gültigkeit für alle Konfigurationsvorlagen besitzen.

Die Erfindung betrifft außerdem ein elektronisches Konfigurationssystem gemäß Anspruch 13.

Schließlich betrifft die Erfindung auch ein System, umfassend zumindest ein elektronisches Konfigurationssystem der oben erläuterten Art und zumindest eine industrielle Maschine mit zumindest zwei separaten Geräten. Die industrielle Maschine verwendet die Geräteparameter im Betrieb, d.h. die Geräteparameter beeinflussen den Betrieb der industriellen Maschine.

Das Konfigurationssystem kann, insbesondere automatisch, erkennen, welche Geräte in der industriellen Maschine vorhanden sind und/oder welche Geräte mit dem Konfigurationssystem gekoppelt sind. Basierend auf den vorhandenen Geräten kann das Konfigurationssystem dann verwendbare Konfigurationsvorlagen für den Benutzer freischalten.

Die Ausführungen zu dem erfindungsgemäßen Verfahren gelten für das erfindungsgemäße Konfigurationssystem und das erfindungsgemäße System entsprechend. Dies gilt insbesondere hinsichtlich Vorteilen und bevorzugten Ausführungsformen.

Nachfolgend wird die Erfindung rein beispielhaft unter Bezugnahme auf die Zeichnungen beschrieben. Es zeigen:
- Fig. 1: eine industrielle Maschine mit mehreren separaten Geräten in einer schematischen Ansicht;
- Fig. 2: eine schematische Zuordnung von Geräten zu drei Konfigurationsvorlagen;
- Fig. 3: eine graphische Benutzeroberfläche zur Zuordnung von Geräten zu Konfigurationsvorlagen; und
- Fig. 4: eine graphische Benutzeroberfläche zur Verwendung einer Konfigurationsvorlage, um eine Funktion der Maschine zu konfigurieren.

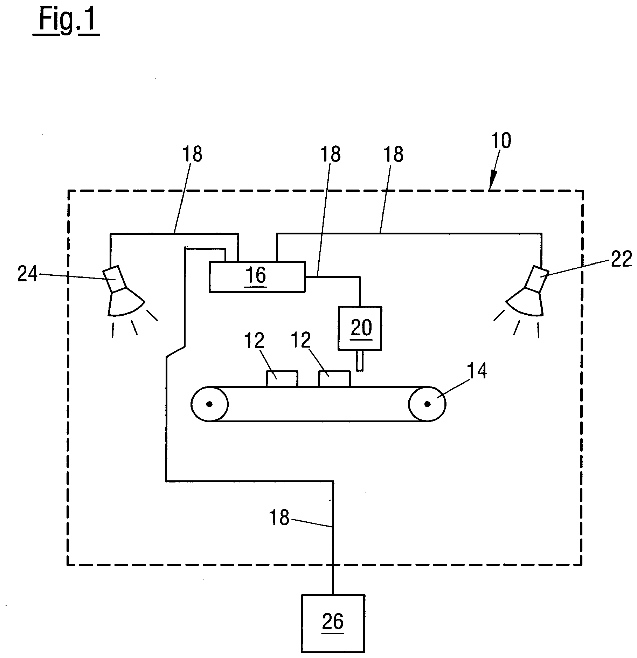

Fig. 1 zeigt eine industrielle Maschine 10. Die Maschine 10 dient der Bearbeitung von Werkstücken 12, welche auf einem Förderband 14 transportiert werden.

Die Maschine 10 umfasst mehrere Geräte. Als erstes Gerät umfasst die Maschine 10 eine speicherprogrammierbare Steuerung (SPS) 16. Die SPS 16 ist mittels eines Feldbusses 18 mit weiteren Geräten verbunden. Über den Feldbus 18 sendet die SPS 16 im Betrieb Anweisungen an die weiteren Geräte. Zudem wird über den Feldbus 18 eine Konfiguration der Geräte mit Geräteparametern vorgenommen, wie nachfolgend noch erläutert wird.

Als weitere Geräte umfasst die Maschine 10 eine Bohrer-Einheit 20, welche Löcher in die Werkstücke 12 einbringt. Weitere Geräte der Maschine 10 sind ein erster Laserscanner 22 und ein zweiter Laserscanner 24. Die Bohrer-Einheit 20 sowie die Laserscanner 22, 24 sind ebenfalls mittels des Feldbusses 18 mit der SPS 16 gekoppelt. Die Laserscanner 22, 24 überwachen Schutzfelder in der Umgebung der Maschine 10, so dass beim Annähern z.B. einer Person an die Bohrer-Einheit 20 die Maschine 10 gestoppt werden kann.

Zur Konfiguration der Maschine 10 kann zumindest zeitweilig ein elektronisches Konfigurationssystem 26 mittels des Feldbusses 18 an die Maschine 10 angeschlossen werden.

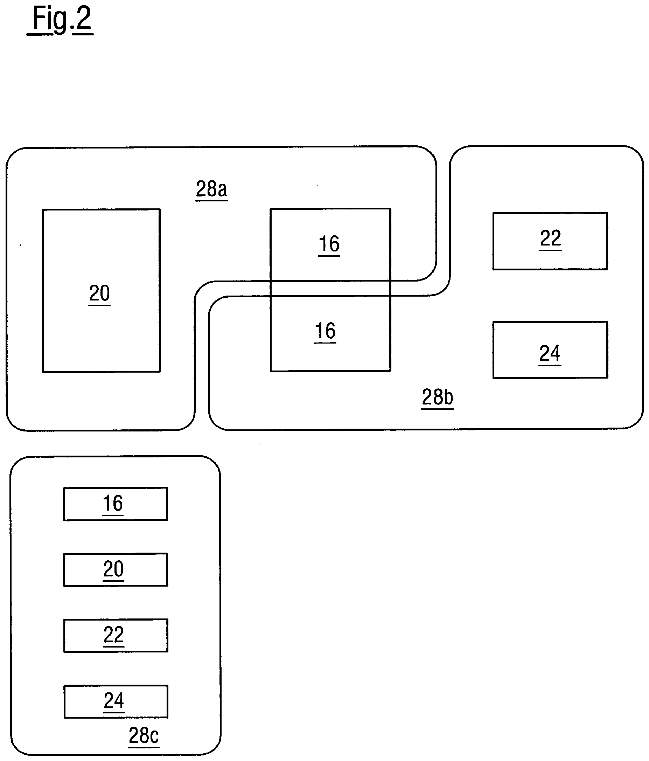

Das Konfigurationssystem 26 kann verschiedene Konfigurationsvorlagen 28 bereitstellen, wie dies in Fig. 2 schematisch dargestellt ist. Fig. 2 zeigt eine erste Konfigurationsvorlage 28a, welche der Konfiguration der Werkstückbearbeitung dient. Der Konfigurationsvorlage 28a ist dementsprechend die Bohrer-Einheit 20 und ein Teil der SPS 16 zugeordnet. Beispielsweise können von der SPS 16 der Konfigurationsvorlage 28a diejenigen Klemmen und diejenige Teillogik zugeordnet sein, die der Steuerung der Bohrer-Einheit 20 dienen.

Einer zweiten Konfigurationsvorlage 28b können der erste Laserscanner 22 und der zweite Laserscanner 24 zugeordnet sein, so dass die Konfigurationsvorlage 28b der Konfiguration von Schutzfeldern dient. Der Konfigurationsvorlage 28b ist zudem auch ein Teil der Klemmen SPS 16 und eine Teillogik der SPS 16 zugeordnet, welche für die Auswertung der Signale der Laserscanner 22, 24 verwendet werden.

Schließlich kann von dem Konfigurationssystem 26 noch eine dritte Konfigurationsvorlage 28c bereitgestellt werden. Der Konfigurationsvorlage 28c dient der Konfiguration der Schnittstellen der Geräte zum Feldbus 18. Durch die Konfigurationsvorlage 28c können die an den Feldbus 18 angeschlossenen Geräte derart konfiguriert werden, dass die jeweils zwischen den Geräten notwendige Datenkommunikation im Betrieb der Maschine 10 gestattet wird.

Es versteht sich, dass in Fig. 2 lediglich Repräsentationen z.B. des Feldbusses 18 oder der Laserscanner 22, 24 gezeigt sind, nicht die reale SPS 16 oder die realen Laserscanner 22, 24.

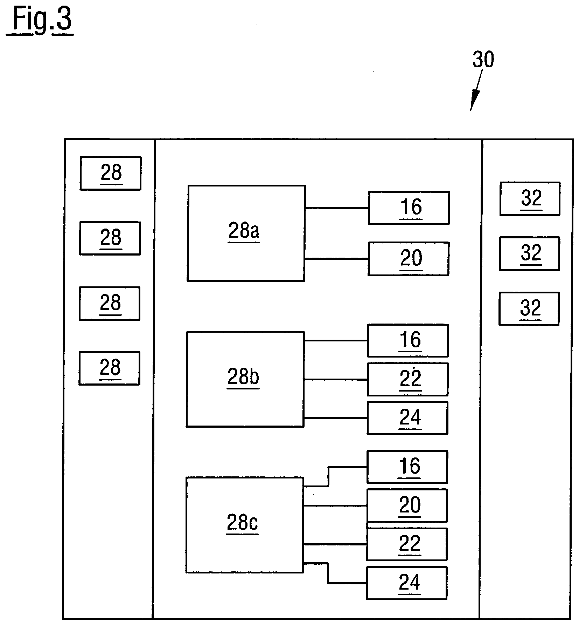

Um die Zuordnung der einzelnen Geräte an die Konfigurationsvorlagen 28 zu ermöglichen, kann das Konfigurationssystem 26 eine graphische Benutzerschnittstelle (GUI) 30 bereitstellen, die in Fig. 3 gezeigt ist. In der GUI 30 sind auf der linken Seite verschiedene Konfigurationsvorlagen 28 dargestellt, die der Benutzer je nach zu konfigurierender Maschine 10 auswählen kann.

Auf der rechten Seite der GUI 30 sind (noch) nicht zugeordnete Geräte 32 dargestellt. Im mittleren Bereich der GUI 30 ist bereits gezeigt, dass der Benutzer die Konfigurationsvorlage 28a ausgewählt hat, die ursprünglich im linken Bereich der GUI 30 dargestellt war. Der Konfigurationsvorlage 28a hat der Benutzer dann einen Teil der SPS 16 und die Bohrer-Einheit 20 zugeordnet. Die SPS 16 und die Bohrer-Einheit 20 waren ursprünglich im rechten Teil der GUI 30 dargestellt. Zudem hat der Benutzer der Konfigurationsvorlage 28b einen anderen Teil der SPS 16 und die Laserscanner 22, 24 zugeordnet. Der Konfigurationsvorlage 28c wurde die SPS 16, die Bohrer-Einheit 20 und die Laserscanner 22, 24 zugeordnet, wobei von diesen Geräten jeweils nur der Teil der Konfigurationsvorlage 28c zugeordnet wurde, welcher die Konfiguration der Feldbusschnittstelle des jeweiligen Geräts betrifft.

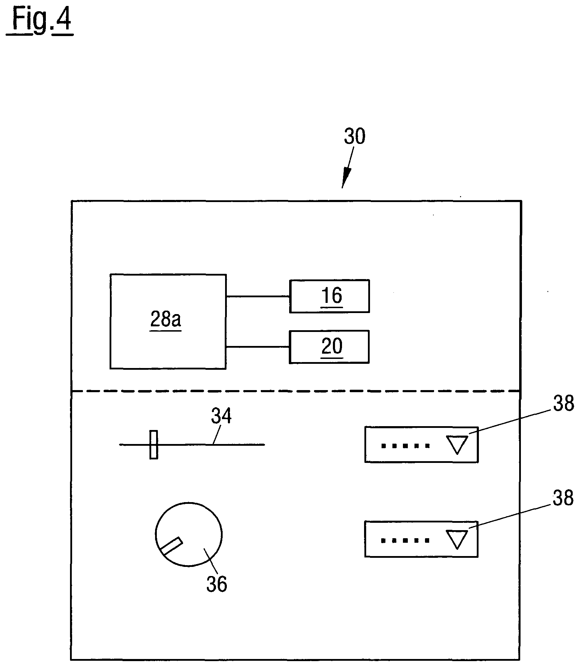

Die vom Benutzer ausgewählten Konfigurationsvorlagen 28a, 28b, 28c können dann mittels der GUI 30 verwendet werden, um jeweils eine Funktion der Maschine 10 zu konfigurieren. Dies ist beispielhaft in Fig. 4 dargestellt, wobei dort die Konfiguration der Bohrfunktion der Maschine 10 gezeigt ist. Dementsprechend wird dort die Konfigurationsvorlage 28a verwendet. Hierbei können ein Schieberegler 34, ein Drehregler 36 oder Drop-Down-Menüs 38 verwendet werden, um die Bohrfunktion der Maschine 10 zu konfigurieren. Beispielsweise kann mittels des Schiebereglers 34 eine erlaubte maximale Bohrtiefe eingestellt werden. Mittels der Drop-Down-Menüs 38 kann dann konfiguriert werden, welche BohrWerkzeuge in der Bohrer-Einheit 20 verwendet werden dürfen.

Aus den Eingaben des Benutzers, die die Funktion der Maschine konfigurieren, erzeugt das Konfigurationssystem 26 dann mit Hilfe eines Geräteparameter-Regelwerks einen Parametersatz mit Geräteparametern. Die Geräteparameter stellen im Betrieb dann sicher, dass die Eingaben des Benutzers von der Maschine 10 umgesetzt werden. So können die Geräteparameter z.B. sicherstellen, dass die maximale Bohrtiefe oder eine maximale Umdrehungszahl von der Bohrer-Einheit 20 eingehalten wird. Dabei darf ein jeder Geräteparameter immer nur von genau einer Konfigurationsvorlage 28 festgelegt werden. Der Parametersatz mit den Geräteparametern wird dann von dem Konfigurationssystem 26 über den Feldbus 18 (oder alternativ z.B. mittels USB oder Speicherkarte) an die Maschine und damit an sämtliche zu konfigurierenden Geräte 16, 20, 22, 24 übermittelt und konfiguriert dort dann die Geräte 16, 20, 22, 24.

Für den Benutzer wird somit die Möglichkeit geschaffen, eine übersichtliche und einfache Konfigurierung der industriellen Maschine 10 vorzunehmen, wobei für den Benutzer die Komplexität sehr gering ist, da die eigentliche Erzeugung der Geräteparameter durch die Konfigurationsvorlagen 28 und damit durch das Konfigurationssystem 26 vorgenommen wird.

### Bezugszeichenliste

- 10: Maschine
- 12: Werkstück
- 14: Förderband
- 16: SPS
- 18: Feldbus
- 20: Bohrer-Einheit
- 22: erster Laserscanner
- 24: zweiter Laserscanner
- 26: Konfigurationssystem
- 28: Konfigurationsvorlage
- 30: GUI
- 32: nicht zugeordnete Geräte
- 34: Schieberegler
- 36: Drehregler
- 38: Drop-Down-Menü

## Patentansprüche

1. Verfahren zur Konfiguration zumindest einer industriellen Maschine (10), wobei die Maschine (10) mehrere separate Geräte (16, 20, 22, 24), beispielsweise Feldgeräte, speicherprogrammierbare Steuerungen (SPS) und/oder Feldbusse, umfasst,
wobei mittels eines elektronischen Konfigurationssystems (26)
- eine vordefinierte Konfigurationsvorlage (28) bereitgestellt wird, wobei der Konfigurationsvorlage (28) zumindest zwei separate Geräte der Maschine (10) zugeordnet werden, wobei die Konfigurationsvorlage (28) eine Zuordnungsvorschrift umfasst, die angibt, welche Geräte (16, 20, 22, 24) der Konfigurationsvorlage (28) zugeordnet werden dürfen oder müssen, und wobei Abhängigkeiten zwischen einzelnen Geräten (16, 20, 22, 24) in der Konfigurationsvorlage (28) hinterlegt sind,
- die Konfigurationsvorlage (28) verwendet wird, um zumindest eine Funktion der industriellen Maschine (10) zu konfigurieren,
- aus der konfigurierten Funktion jeweils ein Parametersatz mit Geräteparametern für die zumindest zwei separaten Geräte (16, 20, 22, 24) erzeugt wird, wobei die Konfigurationsvorlage (28) ein Geräteparameter-Regelwerk umfasst, wobei mittels des Geräteparameter-Regelwerks die Geräteparameter festgelegt werden,
- der Parametersatz an die zumindest zwei separaten Geräte (16, 20, 22, 24) übertragen wird, um die Geräte (16, 20, 22, 24) zu konfigurieren.

2. Verfahren nach Anspruch 1,
wobei
- mehrere weitere vordefinierte Konfigurationsvorlagen (28) bereitgestellt werden,
- die weiteren Konfigurationsvorlagen (28) verwendet werden, um jeweils zumindest eine weitere Funktion der industriellen Maschine (10) zu konfigurieren,
- aus der konfigurierten weiteren Funktion ein weiterer Parametersatz erzeugt wird.

3. Verfahren nach Anspruch 2,
wobei ein Geräteparameter eines Parametersatzes jeweils nur mittels genau einer Konfigurationsvorlage (28) verändert wird.

4. Verfahren nach einem der vorstehenden Ansprüche,
wobei die konfigurierte Funktion ausschließlich eine Funktion der funktionalen Sicherheit der industriellen Maschine (10) betrifft.

5. Verfahren nach einem der vorstehenden Ansprüche,
wobei die Geräteparameter bevorzugt ausschließlich auf der Grundlage von in die Konfigurationsvorlage (28) eingegebenen Daten erzeugt werden.

6. Verfahren nach einem der vorstehenden Ansprüche,
wobei zumindest eine der Konfigurationsvorlagen (28) für ein ihr zugeordnetes Gerät nur einen teilweisen Parametersatz erstellt.

7. Verfahren nach einem der vorstehenden Ansprüche,
wobei anstelle oder zusätzlich zu einem zugeordneten Gerät (16, 20, 22, 24) der Konfigurationsvorlage (28) eine weitere Konfigurationsvorlage (28) zugeordnet wird.

8. Verfahren nach einem der Ansprüche 2 bis 7,
wobei eine Gültigkeitsüberprüfung zumindest einer der Konfigurationsvorlagen (28) durchgeführt wird, bei welcher diese Konfigurationsvorlage (28) dann als gültig angesehen wird, wenn alle Anforderungen von weiteren Konfigurationsvorlagen (28) erfüllt sind.

9. Verfahren nach einem der vorstehenden Ansprüche,
wobei der Parametersatz mit Geräteparametern mittels einer Netzwerkverbindung (18) oder mittels USB an die Geräte (16, 20, 22, 24) übertragen wird.

10. Verfahren nach einem der vorstehenden Ansprüche,
wobei mittels der Konfigurationsvorlage oder den Konfigurationsvorlagen sämtliche Parameter der Geräte (16, 20, 22, 24) der Maschine (10) festgelegt werden.

11. Verfahren nach einem der vorstehenden Ansprüche,
wobei die Konfigurationsvorlage (28) in einer grafischen Benutzerschnittstelle (GUI) angezeigt wird und Eingabefelder oder grafische Eingabeelemente (34-38) umfasst, um die zumindest eine Funktion der industriellen Maschine (10) zu konfigurieren.

12. Verfahren nach einem der Ansprüche 2 bis 11,
wobei nach der Konfiguration der Funktionen der Maschine (10) in den Konfigurationsvorlagen (28) und nach der Erzeugung der entsprechenden Parametersätze eine Verifikation der erzeugten Parametersätze stattfindet.

13. Elektronisches Konfigurationssystem (26) zur Konfiguration zumindest einer industriellen Maschine (10), wobei die Maschine (10) mehrere separate Geräte (16, 20, 22, 24), beispielsweise Feldgeräte, speicherprogrammierbare Steuerungen (SPS) und/oder Feldbusse, umfasst,
wobei das Konfigurationssystem (26) ausgebildet ist,
- eine vordefinierte Konfigurationsvorlage (28) bereitzustellen, wobei der Konfigurationsvorlage (28) zumindest zwei separate Geräte der Maschine (10) zuordenbar sind, wobei die Konfigurationsvorlage (28) ausgebildet ist, um zumindest eine Funktion der industriellen Maschine (10) zu konfigurieren, wobei die Konfigurationsvorlage (28) eine Zuordnungsvorschrift umfasst, die angibt, welche Geräte (16, 20, 22, 24) der Konfigurationsvorlage (28) zugeordnet werden dürfen oder müssen, und wobei Abhängigkeiten zwischen einzelnen Geräten (16, 20, 22, 24) in der Konfigurationsvorlage (28) hinterlegt sind,
- aus der konfigurierten Funktion jeweils einen Parametersatz mit Geräteparametern für die zumindest zwei separaten Geräte (16, 20, 22, 24) zu erzeugen, wobei die Geräteparameter mittels eines Geräteparameter-Regelwerks festgelegt werden,
- den Parametersatz an die zumindest zwei separaten Geräte (16, 20, 22, 24) zu übertragen, um die Geräte (16, 20, 22, 24) zu konfigurieren.

14. System, umfassend zumindest ein elektronisches Konfigurationssystem gemäß Anspruch 13 und zumindest eine industrielle Maschine (10) mit zumindest zwei separaten Geräten (16, 20, 22, 24).

## Claims

1. A method of configuring at least one industrial machine (10), wherein the machine (10) comprises a plurality of separate devices (16, 20, 22, 24), for example, field devices, programmable logic controllers (PLCs) and/or field buses,
wherein, by means of an electronic configuration system (26),
- a predefined configuration template (28) is provided, wherein at least two separate devices of the machine (10) are associated with the configuration template (28), wherein the configuration template (28) comprises a mapping rule that specifies which devices (16, 20, 22, 24) may or have to be associated with the configuration template (28), and wherein dependencies between individual devices (16, 20, 22, 24) are stored in the configuration template (28),
- the configuration template (28) is used to configure at least one function of the industrial machine (10),
- a respective parameter set having device parameters for the at least two separate devices (16, 20, 22, 24) is generated from the configured function, wherein the configuration template (28) comprises a device parameter set of rules, wherein the device parameters are defined by means of the device parameter set of rules,
- the parameter set is transmitted to the at least two separate devices (16, 20, 22, 24) to configure the devices (16, 20, 22, 24).

2. A method in accordance with claim 1,
wherein
- a plurality of further predefined configuration templates (28) are provided,
- the further configuration templates (28) are used to configure at least one further function of the industrial machine (10) in each case,
- a further parameter set is generated from the configured further function.

3. A method in accordance with claim 2,
wherein a device parameter of a parameter set is changed only by means of exactly one configuration template (28) in each case.

4. A method in accordance with any one of the preceding claims,
wherein the configured function relates solely to a function of the functional safety of the industrial machine (10).

5. A method in accordance with any one of the preceding claims,
wherein the device parameters are preferably generated solely on the basis of data input into the configuration template (28).

6. A method in accordance with any one of the preceding claims,
wherein at least one of the configuration templates (28) creates only a partial parameter set for a device associated with it.

7. A method in accordance with any one of the preceding claims,
wherein, instead of or in addition to an associated device (16, 20, 22, 24), a further configuration template (28) is associated with the configuration template (28).

8. A method in accordance with any one of the claims 2 to 7,
wherein a validity check of at least one of the configuration templates (28) is performed during which this configuration template (28) is only considered valid when all the requirements of further configuration templates (28) are met.

9. A method in accordance with any one of the preceding claims,
wherein the parameter set having device parameters is transmitted to the devices (16, 20, 22, 24) by means of a network connection (18) or by means of USB.

10. A method in accordance with any one of the preceding claims,
wherein all the parameters of the devices (16, 20, 22, 24) of the machine (10) are defined by means of the configuration template or the configuration templates.

11. A method in accordance with any one of the preceding claims,
wherein the configuration template (28) is displayed in a graphical user interface (GUI) and comprises input fields or graphical input elements (34-38) to configure the at least one function of the industrial machine (10).

12. A method in accordance with any one of the claims 2 to 11,
wherein a verification of the generated parameter sets takes place after the configuration of the functions of the machine (10) in the configuration templates (28) and after the generation of the corresponding parameter sets.

13. An electronic configuration system (26) for configuring at least one industrial machine (10), wherein the machine (10) comprises a plurality of separate devices (16, 20, 22, 24), for example, field devices, programmable logic controllers (PLCs) and/or fieldbuses,
wherein the configuration system (26) is configured
- to provide a predefined configuration template (28), wherein at least two separate devices of the machine (10) can be associated with the configuration template (28), wherein the configuration template (28) is configured to configure at least one function of the industrial machine (10), wherein the configuration template (28) comprises a mapping rule that specifies which devices (16, 20, 22, 24) may or have to be associated with the configuration template (28), and wherein dependencies between individual devices (16, 20, 22, 24) are stored in the configuration template (28),
- to generate a respective parameter set having device parameters for the at least two separate devices (16, 20, 22, 24) from the configured function, wherein the device parameters are defined by means of a device parameter control system,
- to transmit the parameter set to the at least two separate devices (16, 20, 22, 24) to configure the devices (16, 20, 22, 24).

14. A system comprising at least one electronic configuration system (20) in accordance with claim 13 and at least one industrial machine (10) having at least two separate devices (16, 20, 22, 24).

## Revendications

1. Procédé de configuration d'au moins une machine industrielle (10), la machine (10) comprenant plusieurs appareils séparés (16, 20, 22, 24), par exemple des appareils de terrain, des automates programmables industriels (API) et/ou des bus de terrain,
dans lequel un système de configuration électronique (26) permet de
- fournir un modèle de configuration prédéfini (28), au moins deux appareils séparés de la machine (10) étant affectés au modèle de configuration (28), le modèle de configuration (28) comprenant une prescription d'affectation qui indique quels appareils (16, 20, 22, 24) peuvent ou doivent être affectés au modèle de configuration (28), et des interdépendances entre les appareils individuels (16, 20, 22, 24) étant mémorisées dans le modèle de configuration (28),
- utiliser le modèle de configuration (28) pour configurer au moins une fonction de la machine industrielle (10),
- à partir de la fonction configurée, générer un jeu de paramètres respectif ayant des paramètres d'appareil pour lesdits au moins deux appareils séparés (16, 20, 22, 24), le modèle de configuration (28) comprenant un ensemble de règles de paramètres d'appareil, les paramètres d'appareil étant fixés au moyen de l'ensemble de règles de paramètres d'appareil,
- transmettre le jeu de paramètres auxdits au moins deux appareils séparés (16, 20, 22, 24), afin de configurer les appareils (16, 20, 22, 24).

2. Procédé selon la revendication 1,
dans lequel
- plusieurs autres modèles de configuration prédéfinis (28) sont fournis,
- les autres modèles de configuration (28) sont utilisés pour configurer au moins une autre fonction respective de la machine industrielle (10),
- un autre jeu de paramètres est généré à partir de l'autre fonction configurée.

3. Procédé selon la revendication 2,
dans lequel un paramètre d'appareil d'un jeu de paramètres n'est modifié qu'au moyen d'exactement un modèle de configuration (28) respectif.

4. Procédé selon l'une des revendications précédentes,
dans lequel la fonction configurée concerne exclusivement une fonction de la sécurité fonctionnelle de la machine industrielle (10).

5. Procédé selon l'une des revendications précédentes,
dans lequel les paramètres d'appareil sont générés de préférence exclusivement en se basant sur des données introduites dans le modèle de configuration (28).

6. Procédé selon l'une des revendications précédentes,
dans lequel l'un au moins des modèles de configuration (28) ne crée qu'un jeu de paramètres partiel pour un appareil qui lui est affecté.

7. Procédé selon l'une des revendications précédentes,
dans lequel, à la place ou en plus d'un appareil (16, 20, 22, 24) affecté, un autre modèle de configuration (28) est affecté au modèle de configuration (28).

8. Procédé selon l'une des revendications 2 à 7,
dans lequel s'effectue un contrôle de validité de l'un au moins des modèles de configuration (28), dans lequel ce modèle de configuration (28) est considéré comme valide si toutes les exigences d'autres modèles de configuration (28) sont satisfaites.

9. Procédé selon l'une des revendications précédentes,
dans lequel le jeu de paramètres ayant des paramètres d'appareil est transmis aux appareils (16, 20, 22, 24) au moyen d'une connexion réseau (18) ou par USB.

10. Procédé selon l'une des revendications précédentes,
dans lequel tous les paramètres des appareils (16, 20, 22, 24) de la machine (10) sont fixés au moyen du modèle de configuration ou des modèles de configuration.

11. Procédé selon l'une des revendications précédentes,
dans lequel le modèle de configuration (28) est affiché dans une interface graphique utilisateur (GUI) et comprend des champs de saisie ou des éléments graphiques de saisie (34-38), afin de configurer ladite au moins une fonction de la machine industrielle (10).

12. Procédé selon l'une des revendications 2 à 11,
dans lequel, après la configuration des fonctions de la machine (10) dans les modèles de configuration (28) et après la génération des jeux de paramètres correspondants, une vérification des jeux de paramètres générés est effectuée.

13. Système de configuration électronique (26) pour configurer au moins une machine industrielle (10), la machine (10) comprenant plusieurs appareils séparés (16, 20, 22, 24), par exemple des appareils de terrain, des automates programmables industriels (API) et/ou des bus de terrain,
le système de configuration (26) étant réalisé pour
- fournir un modèle de configuration prédéfini (28), au moins deux appareils séparés de la machine (10) étant affectables au modèle de configuration (28), le modèle de configuration (28) étant réalisé pour configurer au moins une fonction de la machine industrielle (10), le modèle de configuration (28) comprenant une prescription d'affectation qui indique quels appareils (16, 20, 22, 24) peuvent ou doivent être affectés au modèle de configuration (28), et des interdépendances entre les appareils individuels (16, 20, 22, 24) étant mémorisées dans le modèle de configuration (28),
- à partir de la fonction configurée, générer un jeu de paramètres respectif ayant des paramètres d'appareil pour lesdits au moins deux appareils séparés (16, 20, 22, 24), les paramètres d'appareil étant fixés au moyen d'un ensemble de règles de paramètres d'appareil,
- transmettre le jeu de paramètres auxdits au moins deux appareils séparés (16, 20, 22, 24), afin de configurer les appareils (16, 20, 22, 24).

14. Système comprenant au moins un système de configuration électronique selon la revendication 13 et au moins une machine industrielle (10) avec au moins deux appareils séparés (16, 20, 22, 24).
